# EUROPÄISCHE PATENTSCHRIFT

(11) **EP 3 743 324 B1**
(45) Veröffentlichungstag und Bekanntmachung des Hinweises auf die Patenterteilung: **06.10.2021**
(21) Anmeldenummer: 19702207.2
(22) Anmeldetag: 22.01.2019
(51) Int. Cl.: B62D 5/00, B62D 1/185, B62D 1/189, B62D 1/181, B62D 5/04

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 24.01.2018 DE 102018101528
(43) Veröffentlichungstag der Anmeldung: 02.12.2020
(73) Patentinhaber: thyssenkrupp Presta AG, 9492 Eschen (LI); thyssenkrupp AG, 45143 Essen (DE)
(72) Erfinder: FORTE, Sebastian, 9493 Mauren (LI); GALEHR, Robert, 9486 Schaanwald (LI); KREUTZ, Daniel, 6800 Feldkirch (AT)
(74) Vertreter: thyssenkrupp Intellectual Property GmbH
(86) Internationale Anmeldenummer: PCT/EP2019/051470
(87) Internationale Veröffentlichungsnummer: WO 2019/145281

(56) Entgegenhaltungen:
- DE-A1-102009 055 022
- DE-A1-102015 224 602
- US-A1- 2014 090 510

## Beschreibung

Die vorliegende Erfindung betrifft eine Lenksäule für ein Steer-by-Wire-Lenksystem für ein Kraftfahrzeug, umfassend eine mit einem Lenkrad verbindbare Lenkwelle, die in einem inneren Mantelrohr drehbar um eine Längsachse aufgenommen ist, wobei das innere Mantelrohr einen Außendurchmesser aufweist, und ein äußeres Mantelrohr, in dem das innere Mantelrohr entlang der Längsachse verschiebbar aufgenommen ist, wobei das äußere Mantelrohr mit einem Chassis des Kraftfahrzeuges verbindbar ist, wobei die Lenksäule weiterhin einen Feedback-Aktuator umfasst, der einen Elektromotor aufweist, der über ein mit der Lenkwelle zum Übertragen eines Drehmomentes verbundenes Antriebsbauteil die Lenkwelle antreibt.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale, wobei darunter zu verstehen ist, dass der Fahrerlenkwunsch von einem Lenkwinkelsensor abgegriffen wird, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Allerdings ist eine entsprechend angepasste Rückmeldung, beispielsweise beim Parken oder bei einer Geradeausfahrt, bei der ein der Fahrzeugreaktion angepasstes, je nach Fahrzeughersteller unterschiedliches Lenkmoment als Kraft-Rückmeldung gewünscht ist, vorgesehen. Bei einer Kurvenfahrt wirken Reaktionskräfte als Querkräfte auf das Lenkgetriebe, welche ein Feedback-Aktuator in Form eines der Lenkrichtung entgegengesetzten Moments nachbildet. Der Feedback-Aktuator leitet das Drehmoment in eine Lenksäule ein. Eine solche Lenksäule ist bevorzugt verstellbar, wobei es vorgesehen sein kann, dass die Lenksäule motorisch verstellbar ist. Weiterhin kann es vorgesehen sein, dass die Lenksäule im Fall einer autonomen Fahrzeugführung in eine verstaute Position verfährt.

Die Offenlegungsschrift DE 199 02 557 A1 zeigt eine Lenksäule mit einem Feedback-Aktuator, wobei das Drehmoment mittels eines Schneckenrads in eine Lenkwelle eingetragen wird.

Aus der Schrift DE 10 2015 007 280 A1 ist weiterhin eine Steer-by-Wire Lenkung mit einer mechanischen Rückfallebene bekannt, wobei das Drehmoment des Feedback-Aktuators ebenfalls mittels eines Schneckenrads in die Lenkwelle der Lenksäule eingebracht wird. Ein großer Nachteil dieser Lösungen ist es, dass die Lenksäulen einen hohen Bauraumbedarf aufweisen, um einen großen Verstellweg zu ermöglichen.

Es ist deshalb eine Aufgabe der vorliegenden Erfindung, eine Lenksäule für ein Steer-by-Wire-Lenksystem eines Kraftfahrzeuge anzugeben, die einen kompakten Aufbau aufweist und einen großen Verstellweg bereitstellt.

Diese Aufgabe wird durch eine Lenksäule mit den Merkmalen des Anspruchs 1 gelöst. In den Unteransprüchen sind vorteilhafte Weiterbildungen der Erfindung genannt.

Somit wird eine Lenksäule für ein Steer-by-Wire-Lenksystem für ein Kraftfahrzeug vorgeschlagen, umfassend eine mit einem Lenkrad verbindbare Lenkwelle, die in einem inneren Mantelrohr drehbar um eine Längsachse aufgenommen ist, wobei das innere Mantelrohr einen Außendurchmesser aufweist, und ein äußeres Mantelrohr, in dem das innere Mantelrohr entlang der Längsachse verschiebbar aufgenommen ist, wobei das äußere Mantelrohr mit einem Chassis des Kraftfahrzeuges verbindbar ist, wobei die Lenksäule weiterhin einen Feedback-Aktuator umfasst, der einen Elektromotor aufweist, der über ein mit der Lenkwelle zum Übertragen eines Drehmomentes verbundenes Antriebsbauteil die Lenkwelle antreibt. Erfindungsgemäß weist das Antriebsbauteil eine Ausnehmung mit einem maximal einbeschriebenen Durchmesser auf, der größer ist als der Außendurchmesser des inneren Mantelrohrs, wobei die Ausnehmung auf der dem inneren Mantelrohr zugewandten Seite des Antriebsbauteils ausgebildet ist.

Der maximal einbeschriebene Durchmesser kann auch als der Durchmesser des Pferchkreises bezeichnet werden. In einer bevorzugten Ausführungsform weist die Ausnehmung eine kreiszylindrische Grundform auf, ist also mit anderen Worten als kreiszylindrische Öffnung ausgebildet, wobei in diesem Fall der maximal einbeschriebene Durchmesser dem Durchmesser der kreiszylindrischen Grundform, also dem Innendurchmesser der kreiszylindrischen Öffnung entspricht.

Unter dem Außendurchmesser des inneren Mantelrohrs ist auch der Hüllkreisdurchmesser zu verstehen, wenn das innere Mantelrohr eine von einem Kreiszylinder abweichende Außenquerschnitt aufweist. Somit sei darauf hingewiesen, dass die erfindungsgemäße Lehre sich nicht auf ein inneres Mantelrohr mit einem kreiszylindrischen Außenquerschnitt beschränkt. Die erfindungsgemäße Ausnehmung mit einem maximal einbeschriebenen Durchmesser, der größer ist als der Außendurchmesser des inneren Mantelrohrs ermöglicht es, dass das innere Mantelrohr zumindest teilweise in das Antriebsbauteil einschiebbar ist, beispielsweise bei einem Verstellvorgang der Lenksäule, bei dem das innere Mantelrohr gegenüber dem äußeren Mantelrohr verstellt wird oder bei einem unfallbedingten Zusammenschieben der Lenksäule, bei dem das innere Mantelrohr in das äußere Mantelrohr hineingeschoben wird. Es kann ein Verstellvorgang vorgesehen sein, bei dem das innere Mantelrohr beinahe vollständig in das äußere Mantelrohr eingefahren wird, wobei diese Verstellposition als Verstauposition bezeichnet wird. Diese wird beispielsweise dann eingenommen, wenn das Fahrzeug nicht durch den Fahrzeugführer, sondern autonom gesteuert wird.

Das unfallbedingte Zusammenschieben der Lenksäule, kann dabei so erfolgen, dass eine Energieabsorptionseinrichtung vorgesehen ist, die zwischen dem inneren Mantelrohr und dem äußeren Mantelrohr angeordnet ist, so dass bei dem Einschieben des inneren Mantelrohrs in das äußere Mantelrohr kontrolliert Energie absorbiert wird.

Dank der erfindungsgemäßen Lösung kann ein kompakter Aufbau der Lenksäule beibehalten werden, da das Mantelrohr zumindest teilweise in das Antriebsbauteil einschiebbar ist.

Es kann vorgesehen sein, dass das äußere Mantelrohr direkt oder indirekt mit dem Chassis des Kraftfahrzeugs verbindbar ist. Zur Realisierung einer indirekten Verbindung umfasst die Lenksäule ein Halteteil, welches mit dem Kraftfahrzeug verbindbar ist, wobei das Halteteil das äußere Mantelrohr trägt. Bevorzugt ist das äußere Mantelrohr und das innere Mantelrohr gegenüber dem Halteteil verschwenkbar, so dass eine Höhenverstellung realisiert ist.

Bevorzugt ist die Ausnehmung als kreiszylindrische Öffnung ausgebildet, wobei diese besonders bevorzugt konzentrisch zur Längsachse angeordnet ist. Das innere Mantelrohr ist bevorzugt ebenfalls konzentrisch zur Längsachse angeordnet.

Bevorzugt weist die Ausnehmung eine Tiefe auf, wobei diese Tiefe bevorzugt mindestens 10mm aufweist, besonders bevorzugt 30mm. Es kann dabei vorgesehen sein, dass die Tiefe der Ausnehmung nicht größer ist als die halbe Länge des inneren Mantelrohrs. Unter der Tiefe der Ausnehmung ist das Maß der Ausnehmung zu verstehen, welches angibt wie weit sich die Ausnehmung in das Antriebsbauteil hinein erstreckt.

Vorzugsweise ist die Lenkwelle teleskopierbar und weist eine Innenwelle und eine Außenwelle auf. Dabei sitzt das Antriebsbauteil bevorzugt auf der Innenwelle und ist mit dieser drehfest verbunden.

In einer vorteilhaften Weiterbildung weist das Antriebsbauteil einen Kopplungsabschnitt auf, der mit der Lenkwelle drehfest gekoppelt ist. Besonders bevorzugt kann es dabei vorgesehen sein, dass die Kopplung mittels einer formschlüssigen Verbindung erfolgt, wobei der Kopplungsabschnitt eine Formschlussausnehmung aufweist, die mit dem Außenprofil der Lenkwelle korrespondiert. Der Kopplungsabschnitt kann vorzugsweise mit der Innenwelle kraftschlüssig, formschlüssig und/oder stoffschlüssig, etwa durch Kleben, Löten, Schweißen oder dergleichen, verbunden sein.

Es kann weiterhin mindestens eine Verstemmung in die Lenkwelle eingebracht sein, bei der mittels eines Umformwerkzeugs eine lokale plastische Umformung erfolgt, so dass ein radial vorstehender Materialaufwurf erzeugt wird. Bevorzugt sind mehrere Verstemmungen über den Umfang verteilt angeordnet, die jeweils durch ein in axialer oder radialer Richtung gegen die Lenkwelle, beispielsweise die Innenwelle bewegtes Umformwerkzeug erzeugt werden können. Durch den Materialaufwurf kann das Antriebsbauteil in axialer Richtung formschlüssig auf der Lenkwelle fixiert sein. Dadurch, dass in axialer Richtung auf beiden Seiten Verstemmungen vorgesehen sind, kann das dazwischen angeordnete Antriebsbauteil in beiden axialen Richtungen fixiert werden. Die Verstemmung kann auch eine plastische Verformung des Antriebsbauteils, beispielsweise des Kopplungsabschnitts beinhalten, welche mit dem Materialaufwurf zur Bildung eines formschlüssigen Eingriffs unlösbar verzahnt ist.

In einer ersten Ausführungsform treibt der Elektromotor mittels eines Getriebes die Lenkwelle an.

In einer bevorzugten Weiterbildung ist ein abtriebsseitiges Zahnrad des Getriebes mit dem Antriebsbauteil drehfest gekoppelt. Diese Kopplung kann beispielsweise durch eine kraftschlüssige und/oder formschlüssige und/oder stoffschlüssige Verbindung erfolgen. Alternativ ist es denkbar und möglich, dass das Zahnrad und das Antriebsbauteil als ein einstückiges integrales Bauteil ausgebildet ist.

Es kann vorgesehen sein, dass das Getriebe als Schneckengetriebe ausgebildet ist, wobei das Schneckenrad des Schneckengetriebes das abtriebseitige Zahnrad bildet.

Es ist vorteilhaft, wenn das Zahnrad einen Zahnkranz aufweist, der aus einem Kunststoff gebildet ist. Der Zahnkranz weist die Verzahnung auf. Der Zahnkranz ist bevorzugt direkt auf das Antriebsbauteil aufgespritzt. Dafür kann das Antriebsbauteil auf seiner Außenfläche Rücksprünge und/oder Durchbrüche aufweisen, in die der Kunststoff beim Aufspritzen des Zahnkranzes eindringt und somit eine drehfeste Verbindung zwischen Zahnkranz und Antriebsbauteil bereitstellt.

In einer anderen Ausführungsform umgibt der Elektromotor konzentrisch die Lenkwelle. In diesem Fall wirkt der Elektromotor unmittelbar auf die Lenkwelle, wobei der Elektromotor einen Stator und einen Rotor umfasst, wobei der Rotor drehmomentenschlüssig mit der Lenkwelle gekoppelt ist. Vorzugsweise ist der Rotor des Elektromotors drehfest mit dem Antriebsbauteil verbunden. Der Rotor ist bevorzugt mit der Außenfläche des Antriebsrads gekoppelt. Bevorzugt weist die Lenksäule zumindest einen motorischen Verstellmechanismus auf, der zwischen dem inneren Mantelrohr und dem äußeren Mantelrohr angeordnet ist.

Zur Verstellung des inneren Mantelrohrs relativ zum äußeren Mantelrohrs kann ein motorischer Verstellmechanismus mit einer Antriebseinheit vorgesehen sein, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse oder kurz Spindelachse, drehend antreibbar, wodurch die Gewindespindel und die Spindelmutter je nach Drehrichtung in Richtung der Gewindespindelachse translatorisch aufeinander zu oder voneinander weg bewegt werden können. In einer Ausführungsform ist die Gewindespindel von der Antriebseinheit, die feststehend mit dem inneren Mantelrohr oder äußeren Mantelrohr verbunden ist, um ihre Spindelachse drehend antreibbar und greift in die Spindelmutter ein, die an dem inneren Mantelrohr oder alternativ an dem äußeren Mantelrohr bezüglich Drehung um die Gewindespindelachse feststehend angebracht ist. In Richtung der Spindelachse stützt sich die Gewindespindel an dem inneren Mantelrohr oder äußeren Mantelrohr ab, und die Spindelmutter entsprechend an dem inneren Mantelrohr oder alternativ an dem äußeren Mantelrohr, so dass ein rotatorischer Antrieb der Gewindespindel eine translatorische Verstellung von inneren Mantelrohr und äußeren Mantelrohr relativ zueinander in Richtung der Spindelachse bewirkt. Diese Ausführung wird daher auch als Rotationsspindelantrieb bezeichnet.

In einer alternativen Ausführungsform des Verstellmechanismus ist die Gewindespindel bezüglich Drehung um ihre Spindelachse unverdrehbar mit dem inneren Mantelrohr oder alternativ mit dem äußeren Mantelrohr gekoppelt und die Spindelmutter ist drehbar, aber in Richtung der Spindelachse feststehend, entsprechend an dem äußeren Mantelrohr oder alternativ an dem inneren Mantelrohr gelagert. Wie in der ersten Ausführungsform des Verstellmechanismus stützt sich die Gewindespindel an dem inneren Mantelrohr oder an dem äußeren Mantelrohr ab, und die Spindelmutter entsprechend an dem äußeren Mantelrohr oder an dem inneren Mantelrohr, so dass die Gewindespindel in Richtung der Spindelachse translatorisch verschiebbar ist, indem die Spindelmutter von der Antriebseinheit um die Spindelachse drehend angetrieben wird. Diese Ausführung wird auch als Tauchspindelantrieb bezeichnet.

Durch den rotatorischen Antrieb der Gewindespindel wird wie bei der ersten Alternative eine translatorische Verstellung von dem inneren Mantelrohr und dem äußeren Mantelrohr relativ zueinander in Richtung der Spindelachse bewirkt. In beiden Ausführungen bildet der Spindeltrieb einen zwischen dem inneren Mantelrohr und dem äußeren Mantelrohr wirksamen motorischen Verstellantrieb, durch den das innere Mantelrohr zur Verstellung relativ zum äußeren Mantelrohr verstellt werden kann, wobei die Gewindespindel und die Spindelmutter relativ zueinander (rotatorisch und translatorisch) motorisch bewegbar sind.

Zwei bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: eine räumliche Ansicht einer Lenksäule für ein Steer-by-Wire-Lenksystems,
- Fig. 3:: eine zweite räumliche Ansicht der Lenksäule aus Fig. 2,
- Fig. 4:: die räumliche Ansicht der Lenksäule aus Fig.2 mit einem Schnitt durch ein äußeres Mantelrohr,
- Fig. 5:: einen Querschnitt durch die Lenksäule in Höhe des Schneckenrades,
- Fig. 6:: einen Längsschnitt durch die Lenksäule in ausgefahrener Stellung,
- Fig. 7:: einen Längsschnitt durch die Lenksäule in eingefahrener Stellung,
- Fig. 8:: eine räumliche Ansicht des mit einer Lenkwelle verbundenen Schneckenrades,
- Fig. 9:: eine zweite räumliche Ansicht der Fig. 8,
- Fig. 10:: eine räumliche Ansicht einer Lenksäule für ein Steer-by-Wire-Lenksystems mit einem die Lenkwelle umgebenden Elektromotor,
- Fig. 11:: einen Längsschnitt durch die Lenksäule der Fig.10 in ausgefahrener Stellung,
- Fig. 12:: einen Längsschnitt durch die Lenksäule der Fig.10 in eingefahrener Stellung,
- Fig. 13:: einen detaillierten Querschnitt durch die Lenksäule der Fig.10 im Bereich der Lenkwelle und des Antriebs, sowie
- Fig. 14:: eine räumliche Darstellung der Lenksäule der Fig.10 mit detaillierter Schnittdarstellung im Bereich des Rotors des Elektromotors und der Lenkwelle.

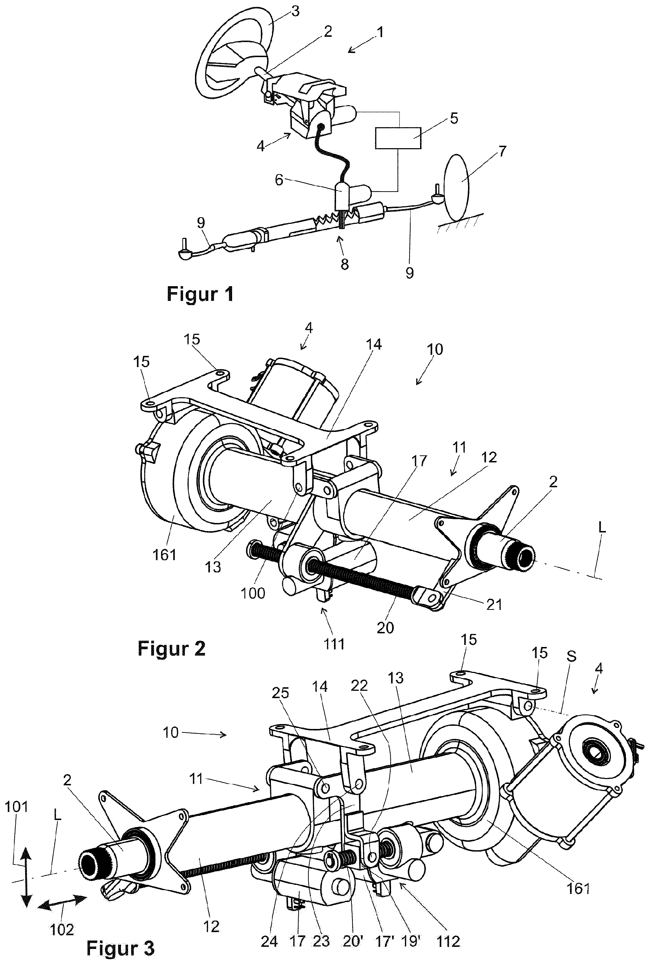

In der Figur 1 ist eine Steer-by-Wire-Lenkung 1 gezeigt. An einer Lenkwelle 2 ist ein nicht dargestellter Drehwinkelsensor angebracht, welcher das durch Drehen des Lenkrads 3 aufgebrachte Fahrerlenkmoment erfasst. Des Weiteren ist an der Lenkwelle 2 ein Feedback-Aktuator 4 angebracht, welcher dazu dient, die Rückwirkungen von der Fahrbahn auf das Lenkrad 3 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an eine Steuereinheit 5 übertragen. Die Steuereinheit 5 steuert in Abhängigkeit von dem Signal des Drehwinkelsensors sowie weiteren Eingangsgrößen, wie z. B. Fahrzeuggeschwindigkeit, Gierrate und dergleichen einen elektrischen Lenksteller 6 an, welcher die Stellung der gelenkten Räder 7 steuert. Der Lenksteller 6 wirkt über ein Zahnstangen-Lenkgetriebe 8 sowie Spurstangen 9 und anderen Bauteilen mittelbar auf die gelenkten Räder 7.

Die Figuren 2 und 3 veranschaulichen eine Lenksäule 10 einer Steer-by-Wire Kraftfahrzeuglenkung, aufweisend die Lenkwelle 2, die um ihre Längsachse L, die auch als Drehachse bezeichnet wird, drehbar in einer Lenkwellenlagereinheit 11, aufweisend ein inneres Mantelrohr 12, gelagert ist. Das innere Mantelrohr 12 ist in einem äußeren Mantelrohr 13 entlang der Längsachse der Lenkwelle 2 verschiebbar geführt. Das äußere Mantelrohr 13 ist um eine Schwenkachse 100 in einem Halteteil 14 schwenkbar gelagert. Das Halteteil 14 kann in Befestigungspunkten 15 an der nicht dargestellten Karosserie befestigt werden. An einem Ende ist die Lenkwelle 2 mit dem nicht dargestellten Lenkrad verbunden. An dem anderen Ende ist der Feedback-Aktuator 4 angeordnet, der über ein Getriebe 16 auf die Lenkwelle 2 einwirkt. Das äußere Mantelrohr 13 umfasst einen vorderen Abschnitt 161 der als Getriebegehäuse zur Aufnahme des Getriebes 16 ausgebildet ist. Zur Erhöhung des Komforts des Fahrers kann die Lenksäule 10 in ihrer Höhe in die Verstellrichtung 101 und in ihrer Länge in die Verstellrichtung 102 verstellt werden. Dazu weist die Lenksäule 10 zwei Verstellantriebe 111,112 auf. Die Verstellantriebe 111,112 weisen jeweils einen Elektromotor 17,17' mit einem Gewindestangenantrieb, auch als Spindelantrieb bezeichnet, auf, welcher eine auf dem Abtrieb des Elektromotors 17,17' angeordnete Schneckenwelle aufweist, wobei die Schneckenwelle mit einem Schneckenrad in Eingriff steht.

Figur 2 zeigt den Verstellantrieb 111 in Längsrichtung 102. Die Gewindestange 20 ist über einen Anlenkhebel 21 mit dem inneren Mantelrohr 12 verbunden, sodass eine Verschiebung des Anlenkhebels 21 gegenüber dem äußeren Mantelrohr 13 zu einer Verschiebung des inneren Mantelrohrs 12 gegenüber dem äußeren Mantelrohr 13 führt. Die Gewindestange 20 ist an dem Anlenkhebel 21 gehalten und erstreckt sich in Längsverstellrichtung 102. Die als Gewindespindel ausgebildete Gewindestange 20 steht mit einer Spindelmutter in Eingriff, wobei die Spindelmutter an ihrer Außenseite als Schneckenrad ausgebildet ist, und in dessen Verzahnung die auf der Abtriebswelle des Elektromotors 17 angeordnete Schneckenwelle eingreift. Durch Rotation der ortsfesten Spindelmutter wird die Gewindestange 20 axial bewegt. Dieser Verstellantrieb des Verstellmechanismus ist als Tauchspindelantrieb ausgebildet.

Figur 3 zeigt den Verstellantrieb 112 in Höhenverstellrichtung 101. Der Elektromotor 17' treibt die Verstellbewegung des äußeren Mantelrohrs 13 gegenüber dem Halteteil 14 in Höhenverstellrichtung 101 an. Über die Verdrehung des Schneckenrads wird die Gewindestange 20' in Rotation versetzt, da die Gewindestange 20' mit dem Schneckenrad drehfest verbunden ist. Die Gewindestange 20' steht mit einer Spindelmutter 19' in Eingriff. Die Spindelmutter 19' ist über ein Gelenk 22 mit einem Stellhebel 23 verbunden, wobei die Spindelmutter 19' drehfest gegenüber der Gewindestand 20' ist. Der Stellhebel 23 ist verschwenkbar in einer Gelenkachse 24 am Halteteil 14 und in einer Gelenkachse 25 an dem äußeren Mantelrohr 13 gehalten. Dadurch wird erreicht, dass über die Spindelmutter 19' und die Gewindestange 20' eine Verschwenkung um eine Schwenkachse S des äußeren Mantelrohrs 13 gegenüber dem Halteteil 14 erfolgt. Dieser Verstellantrieb für die Höhenverstellung ist somit als Rotationsspindel ausgebildet. Der Verstellantrieb 112 ist verschwenkbar an dem äußeren Mantelrohr 13 gehalten.

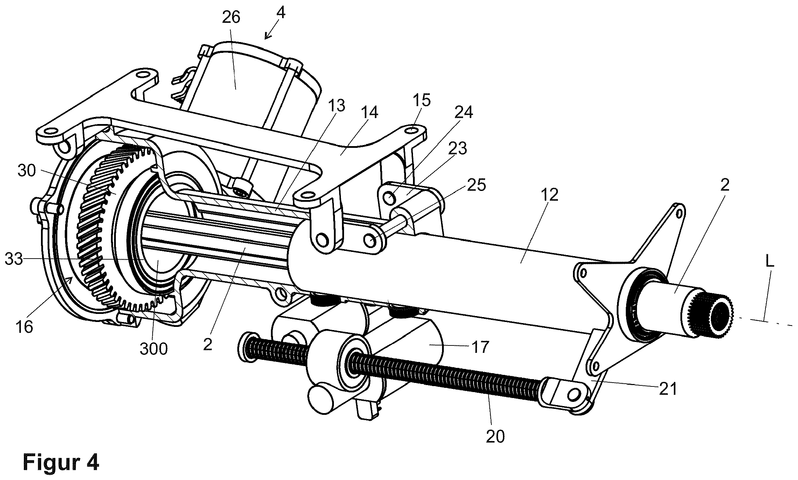

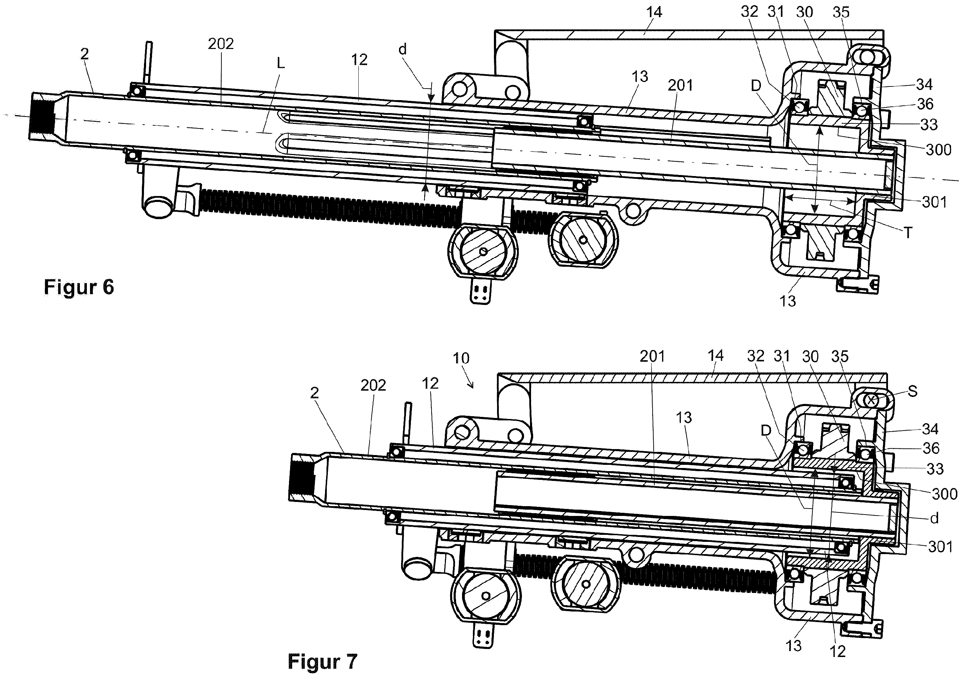

In den Figuren 4 bis 7 ist im Detail das Schneckengetriebe 16 des Feedback-Aktuators 4 dargestellt. Ein elektrischer Motor 26 des Feedback-Aktuators 4 weist eine Motorwelle 27 auf, die über eine Kupplung 28 Drehmomente bzw. Drehbewegungen auf eine Schneckenwelle 29 überträgt. Die Schneckenwelle 29 kämmt mit einem Schneckenrad 30, das mit einer Innenwelle 201 der Lenkwelle 2 zur Übertragung eines Drehmomentes verbunden ist. Die Lenkwelle 2 ist teleskopierbar und weist neben der Innenwelle 201 eine die Innenwelle 201 koaxial umgebende Außenwelle 202 auf. Das Profil der Außenwelle 202 ist dabei komplementär zu einer Ausnehmung der Innenwelle 201 ausgebildet und erlaubt eine Drehmomentübertragung. Das äußere Mantelrohr 13 umgibt an seinem ersten Ende das Schneckenrad 30 umfangseitig und bildet einen Sitz 31 für ein erstes Wälzlager 32, das sich an einem mit dem Schneckenrad 30 drehendem Antriebsbauteil 33 abstützt. Das Schneckenrad 30 umgibt das Antriebsbauteil 33 und sitzt auf diesem drehfest. Das Antriebsbauteil 33 sitzt wiederrum drehfest auf der Lenkwelle 2, so dass eine Drehbewegung von dem Schneckenrad 30 auf die Lenkwelle 2 übertragen werden kann. Dazu weist das Antriebsbauteil 33 einen Kopplungsabschnitt 301 auf, der drehmomentenschlüssig mit der Innenwelle 201 gekoppelt ist. Das äußere Mantelrohr 13 ist an seinem ersten Ende mit einem Deckel 34 verschlossen, der ebenfalls einen Sitz 35 für ein zweites Wälzlager 36 bildet, das sich an dem mit dem Schneckenrad 30 drehenden Antriebsbauteil 33, auf der gegenüberliegenden Seite des ersten Wälzlagers 32 liegend, abstützt. Die Wälzlager 32,36 lagern das Antriebsbauteil 33 drehbar in dem äußeren Mantelrohr 13. Das Antriebsbauteil 33 ist in seinem Längsschnitt glockenförmig ausgebildet. Das Antriebsbauteil 33 weist somit einen ersten zylindrischen Bereich mit einem ersten Durchmesser und einen daran anschließenden zweiten zylindrischen Bereich mit einem zweiten Durchmesser auf, wobei der zweite Durchmesser deutlich kleiner ist als der erste Durchmesser. Im zweiten Bereich sitzt das Antriebsbauteil 33 auf der Innenwelle 201 der Lenkwelle 2. Das Antriebsbauteil 33 wird dort von dem Deckel 34 umgeben. Das Antriebsbauteil 33 weist in dem ersten Bereich eine als Öffnung ausgebildete Ausnehmung 300 zur Aufnahme des inneren Mantelrohres 12 auf. Der erste Durchmesser, auch als Innendurchmesser oder maximal einbeschriebener Durchmesser D ist daher so gewählt, dass sich zwischen der Innenwelle 201 und dem Antriebsbauteil 33 ein Freiraum zur Aufnahme des inneren Mantelrohres 12 in der eingefahrenen Stellung der Lenksäule 10 ergibt, wie dies in der Figur 7 dargestellt ist. Der maximal einbeschriebene Durchmesser D der Ausnehmung 300 ist größer als der Außendurchmesser d des inneren Mantelrohrs 12, wobei die Ausnehmung 300 auf der dem inneren Mantelrohr 12 zugewandten Seite des Antriebsbauteils 33 ausgebildet ist. Die Ausnehmung erstreckt sich in das Innere des Antriebsbauteils 300 um eine Tiefe T hinein.

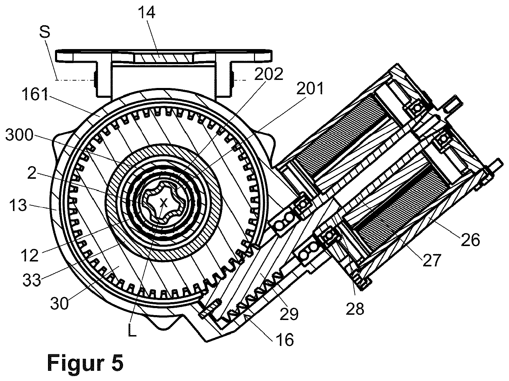

Figur 5 zeigt im Querschnitt von innen nach außen gesehen, die Lenkwelle 2 mit Innen- und Außenwelle 201,202, das innere Mantelrohr 12, das glockenförmige Antriebsbauteil 33, das Schneckenrad 30 und das äußere Mantelrohr 13.

In der Figur 6 ist die ausgefahrene Stellung des inneren Mantelrohrs 12 dargestellt. Ein nicht dargestelltes Lenkrad kann an die Außenwelle 202 befestigt werden. Die Außenwelle 202 ist in dem inneren Mantelrohr 12 drehbar gelagert. Die Innenwelle 201 ist zu einem Großteil aus der Außenwelle 202 herausgeschoben. Am außenwellenfernen Ende der Innenwelle 201 sitzt das glockenförmige Antriebsbauteil 33, das mittels der Ausnehmung 300 einen Freiraum zwischen Innenwelle 201 und Schneckenrad 30 ausbildet.

Figur 7 zeigt die eingefahrene Stellung der Lenksäule 10, wie dies beispielsweise nach einem Crash oder in einer Verstauposition der Fall ist. Das innere Mantelrohr 12 und die Außenwelle 202 werden soweit in das äußere Mantelrohr 13 hineingeschoben, dass die Enden in die Ausnehmung 300 zwischen Innenwelle 201 und Antriebsbauteil 33 hineingeschoben werden. Da der Außendurchmesser d des inneren Mantelrohrs 12 kleiner als der maximal einbeschriebene Durchmesser D, also in dieser Ausführung gleichbedeutend mit dem Innendurchmesser, der Ausnehmung 300 des Antriebsbauteils 33 ist, kann das innere Mantelrohr 12 in die Ausnehmung 300 des Antriebsbauteils 33 zumindest teilweise (abschnittsweise) eingeschoben werden. Die Ausnehmung 300 ist in dieser Ausführungsvariante als kreiszylindrische Öffnung ausgebildet, wobei diese konzentrisch zur Längsachse L angeordnet ist. Der Bereich in dem sonst das Schneckenrad unmittelbar auf der Innenwelle sitzt kann so genutzt werden, wodurch der Verstellweg deutlich größer wird, ohne dass mehr Bauraum benötigt wird.

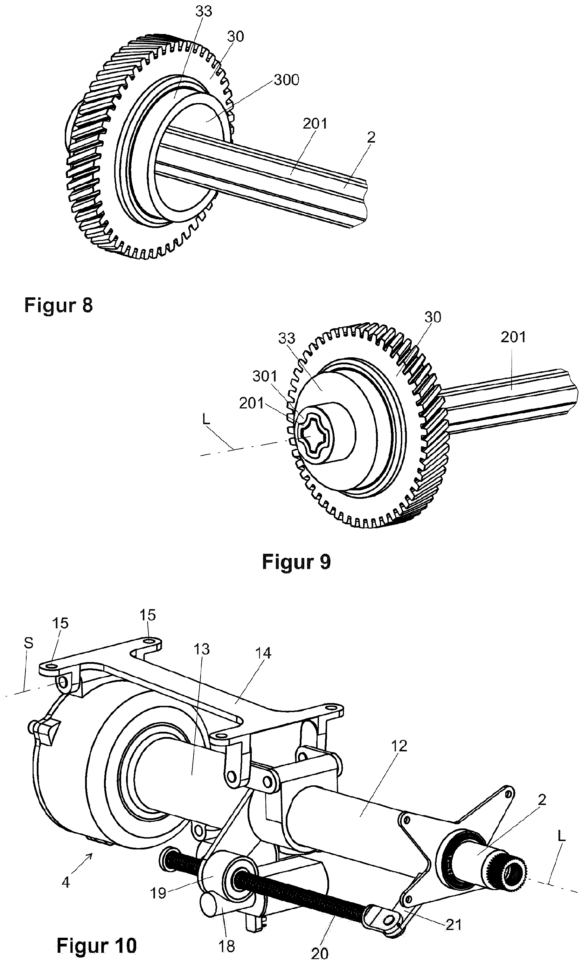

Die Figuren 8 und 9 zeigen im Detail den Sitz des Schneckenrades 30 auf dem Antriebsbauteil 33 und den Sitz des Antriebsbauteils 33 auf der Innenwelle 201. Das Antriebsbauteil 33 weist eine zum Profil der Innenwelle 201 komplementäre Nabe in dem Kopplungsabschnitt 301 auf, die für eine drehfeste Verbindung mit der Innenwelle 201 sorgt. Das dargestellte Kleeblattprofil kann durch eine andere drehmomentübertragene Schiebeverbindung ersetzt werden.

Im Endbereich des Kopplungsabschnitts 301 sind Verstemmungen 333 in die Innenwelle 201 eingebracht, vorzugsweise über den Umfang verteilt. Die Verstemmungen 333, die durch ein Umformwerkzeug in radialer oder axialer Richtung plastisch eingeformt werden, wobei jeweils ein radial vorstehender lokaler Materialaufwurf erzeugt wird. Durch den Materialaufwurf wird der Kopplungsabschnitt 301 und damit das Antriebsbauteil 33 in axialer Richtung formschlüssig auf der Innenwelle 201 fixiert. Die Verstemmung 333 kann auch eine plastische Umformung des Kopplungsabschnitts 301 beinhalten, so dass eine unlösbarer formschlüssiger Eingriff erzeugt wird. Bevorzugt kann auch auf der dem Kopplungsabschnitt 301 abgewandten Stirnseite eine oder mehrere Verstemmungen 333 vorgeshen sein, so dass das Antriebsbauteil 33 zwischen den Verstemmungen 333 in axialer Richtung auf der Innenwelle 201 formschlüssig gehalten ist.

Anstelle des dargestellten Schneckengetriebes können auch andere Getriebeformen wie z. B. Reibradgetriebe, Stirnradgetriebe oder Riementriebe verwendet werden. Allen Getriebeformen ist gemeinsam, dass das abtriebsseitige, zur Verbindung mit der inneren Lenkwelle vorgesehene Antriebsbauteil eine Ausnehmung mit einem maximal einbeschriebenen Durchmesser aufweist, der größer ist als der Außendurchmesser des inneren Mantelrohrs, wobei die Ausnehmung auf der dem inneren Mantelrohr zugewandten Seite des Antriebsbauteils ausgebildet ist.

Die Figuren 10 bis 14 zeigen eine zweite Ausführungsform der Erfindung, bei der ein Rotor 260 des Feedback-Aktuators 4 unmittelbar auf die Lenkwelle 2 wirkt. Der Elektromotor 26 umschließt die Innenwelle 201 der Lenkwelle 2 konzentrisch. Der Rotor 260 sitzt auf dem Antriebsbauteil 33 und ist mit diesem drehfest verbunden. Ein Stator 261 des Elektromotors 26 ist auf der Außenseite des Rotors 260 angeordnet. Das äußere Mantelrohr 13 umgibt an seinem ersten vorderen Ende den Stator 261 des Elektromotors 26 umfangseitig und bildet den Sitz für das erstes Wälzlager 32, das sich an dem mit dem Rotor 260 drehenden Antriebsbauteil 33 abstützt. Das Antriebsbauteil 33 weist einen Kopplungsabschnitt 301 auf, der mit der Innenwelle 201 der Lenkwelle 2 drehfest gekoppelt ist, so dass eine Drehbewegung von dem Rotor 260 auf die Lenkwelle 2 übertragen werden kann. Das Antriebsbauteil 33 ist in seinem Querschnitt, wie in der ersten Ausführungsform beschrieben ausgebildet, wobei das Antriebsbauteil eine Ausnehmung 300 mit einem maximal einbeschriebenen Durchmesser D aufweist, der größer ist als der Außendurchmesser d des inneren Mantelrohrs 12, wobei die Ausnehmung 300 auf der dem inneren Mantelrohr 12 zugewandten Seite des Antriebsbauteils 33 ausgebildet ist. Die Ausnehmung erstreckt sich in das Innere des Antriebsbauteils 33 um eine Tiefe T hinein.

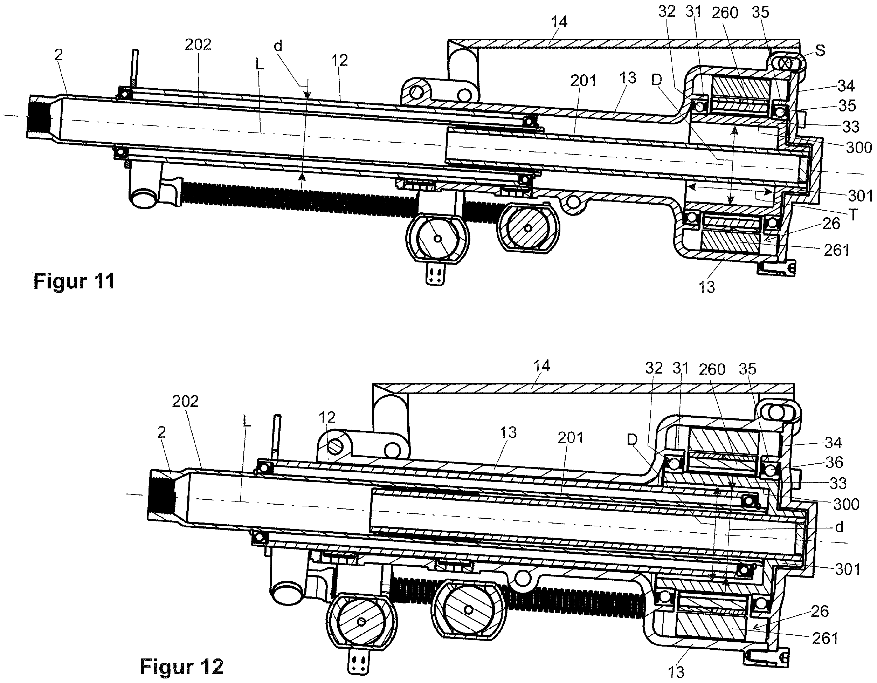

In der Figur 11 ist die Lenksäule der Figur 10 in der ausgefahrenen Stellung dargestellt. Im Inneren des Elektromotors 26 bildet das Antriebsbauteils 33 einen Freiraum durch die Ausnehmung 300 aus. Mittels des Antriebsbauteils 33 wirkt der Rotor 260 unmittelbar auf die Innenwelle 201 der Lenkwelle 2. Unter dem Begriff "unmittelbar" wird in diesem Fall verstanden, dass kein Getriebe vorhanden ist und das abtriebsseitige Element, in diesem Fall der Rotor selbst, mit der Lenkwelle verbunden ist.

Figur 12 zeigt die eingefahrene Stellung der Lenksäule der Figur 10, wie dies beispielsweise nach einem Crash oder in einer Verstauposition der Fall ist. Das innere Mantelrohr 12 schiebt sich in die Ausnehmung 300 des Antriebsbauteils 33. Diese Ausführungsform ist besonders kompakt, da auf ein Getriebe verzichtet wird. Zudem steht dank der erfindungsgemäßen Anordnung der Bereich des Elektromotors als Verstellweg, Verstauweg oder Crashweg zur Verfügung.

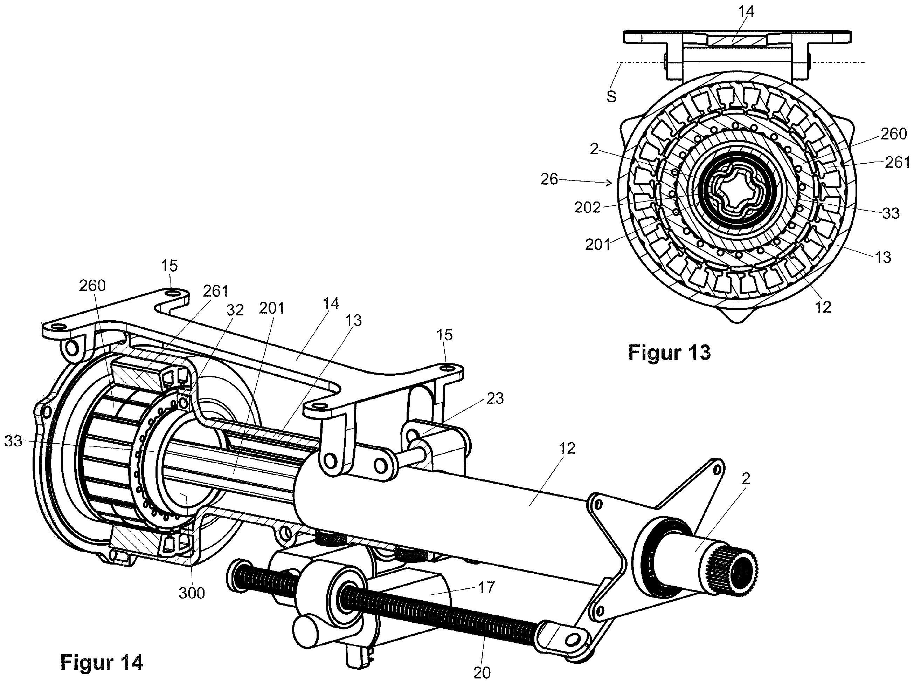

In der Figur 13 ist der Elektromotor 26 der zweiten Ausführungsform im Querschnitt dargestellt. Von innen nach außen gesehen, sind die Lenkwelle 2 mit Innen- und Außenwelle 201,202, das innere Mantelrohr 12, das glockenförmige Antriebsbauteil 33, der Rotor 260, der Stator 261 und das äußere Mantelrohr 13 dargestellt.

Figur 14 zeigt in räumlicher Darstellung die Anordnung des Elektromotors 26 konzentrisch um die Lenkwelle 2 bzw. die Innenwelle der Lenkwelle 2. Das Antriebsbauteil 33 ist in dem äußeren Mantelrohr 13 mittels des ersten Wälzlagers 32 gelagert.

Es können auch andere Motorbauformen wie z. B Transversalflussmotoren verwendet werden.

## Patentansprüche

1. Lenksäule (10) für ein Steer-by-Wire-Lenksystem für ein Kraftfahrzeug, umfassend eine mit einem Lenkrad verbindbare Lenkwelle (2), die in einem inneren Mantelrohr (12) drehbar um eine Längsachse (L) aufgenommen ist, wobei das innere Mantelrohr (12) einen Außendurchmesser (d) aufweist, und ein äußeres Mantelrohr (13), in dem das innere Mantelrohr (12) entlang der Längsachse verschiebbar aufgenommen ist, wobei das äußere Mantelrohr (13) mit einem Chassis des Kraftfahrzeuges verbindbar ist, wobei die Lenksäule (10) weiterhin einen Feedback-Aktuator (4) umfasst, der einen Elektromotor (26) aufweist, der über ein mit der Lenkwelle (2) zum Übertragen eines Drehmomentes verbundenes Antriebsbauteil (33) die Lenkwelle (2) antreibt, **dadurch gekennzeichnet, dass** das Antriebsbauteil (33) eine Ausnehmung (300) mit einem maximal einbeschriebenen Durchmesser (D) aufweist, der größer ist als der Außendurchmesser des inneren Mantelrohrs (12), wobei die Ausnehmung (300) auf der dem inneren Mantelrohr (12) zugewandten Seite des Antriebsbauteils ausgebildet ist.

2. Lenksäule (10) nach Anspruch 1, **dadurch gekennzeichnet, dass** die Lenkwelle (2) teleskopierbar ist und eine Innenwelle (201) und eine Außenwelle (202) aufweist.

3. Lenksäule (10) nach Anspruch 2, **dadurch gekennzeichnet, dass** das Antriebsbauteil (33) einen Kopplungsabschnitt (301) aufweist, der mit der Lenkwelle (2) drehfest gekoppelt ist.

4. Lenksäule (10) nach einem der vorhergehenden Ansprüche, **dadurch gekennzeichnet, dass** der Elektromotor (26) mittels eines Getriebes (16) die Lenkwelle (2) antreibt.

5. Lenksäule (10) nach Anspruch 4, **dadurch gekennzeichnet, dass** ein abtriebseitiges Zahnrad (30) des Getriebes (16) mit dem Antriebsbauteil (33) drehfest verbunden ist.

6. Lenksäule (10) nach Anspruch 4 oder 5, **dadurch gekennzeichnet, dass** das Getriebe (16) ein Schneckengetriebe ist und ein Schneckenrad (30) das abtriebseitige Zahnrad bildet.

7. Lenksäule (10) nach einem der vorhergehenden Ansprüche 5 oder 6, **dadurch gekennzeichnet, dass** das Zahnrad (30) einen Zahnkranz aufweist, der aus einem Kunststoff gebildet ist.

8. Lenksäule (10) nach einem der vorhergehenden Ansprüche 1 bis 3, **dadurch gekennzeichnet, dass** der Elektromotor (26) konzentrisch die Lenkwelle (2) umgibt.

9. Lenksäule (10) nach Anspruch 8, **dadurch gekennzeichnet, dass** der Rotor (260) des Elektromotors (26) drehfest mit dem Antriebsbauteil (33) verbunden ist.

10. Lenksäule (10) nach einem der vorhergehenden Ansprüche, **dadurch gekennzeichnet, dass** die Lenksäule (10) zumindest einen motorischen Verstellmechanismus aufweist, der zwischen dem inneren Mantelrohr (12) und dem äußeren Mantelrohr (13) angeordnet ist.

## Claims

1. A steering column (10) for a steer-by-wire steering system for a motor vehicle, comprising a steering shaft (2) which can be connected to a steering wheel and is received in an inner steering column tube (12) such that it can be rotated about a longitudinal axis (L), the inner steering column tube (12) having an external diameter (d), and an outer steering column tube (13), in which the inner steering column tube (12) is received such that it can be displaced along the longitudinal axis, it being possible for the outer steering column tube (13) to be connected to a chassis of the motor vehicle, the steering column (10) comprising, furthermore, a feedback actuator (4) which has an electric motor (26) which drives the steering shaft (2) via a drive component (33) which is connected to the steering shaft (2) for the transmission of a torque, **characterized in that** the drive component (33) has a recess (300) with a maximum inscribed diameter (D) which is greater than the external diameter of the inner steering column tube (12), the recess (300) being formed on that side of the drive component which faces the inner steering column tube (12).

2. The steering column (10) as claimed in claim 1, **characterized in that** the steering shaft (2) is telescopic and has an inner shaft (201) and an outer shaft (202).

3. The steering column (10) as claimed in claim 2, **characterized in that** the drive component (33) has a coupling section (301) which is coupled fixedly to the steering shaft (2) so as to rotate with it.

4. The steering column (10) as claimed in one of the preceding claims, **characterized in that** the electric motor (26) drives the steering shaft (2) by means of a gear mechanism (16).

5. The steering column (10) as claimed in claim 4, **characterized in that** an output-side gearwheel (30) of the gear mechanism (16) is connected fixedly to the drive component (33) so as to rotate with it.

6. The steering column (10) as claimed in claim 4 or 5, **characterized in that** the gear mechanism (16) is a worm gear mechanism, and a worm gear (30) forms the output-side gearwheel.

7. The steering column (10) as claimed in either of the preceding claims 5 and 6, **characterized in that** the gearwheel (30) has a toothed rim which is formed from a plastic.

8. The steering column (10) as claimed in one of the preceding claims 1 to 3, **characterized in that** the electric motor (26) surrounds the steering shaft (2) concentrically.

9. The steering column (10) as claimed in claim 8, **characterized in that** the rotor (260) of the electric motor (26) is connected fixedly to the drive component (33) so as to rotate with it.

10. The steering column (10) as claimed in one of the preceding claims, **characterized in that** the steering column (10) has at least one motorized adjusting mechanism which is arranged between the inner steering column tube (12) and the outer steering column tube (13).

## Revendications

1. Colonne de direction (10) destinée à un système de direction à commande électrique d'un véhicule automobile, ladite colonne de direction comprenant un arbre de direction (2) qui peut être relié à un volant et qui est reçu dans un tube d'enveloppe intérieur (12) de manière à pouvoir tourner sur un axe longitudinal (L), le tube d'enveloppe intérieur (12) ayant un diamètre extérieur (d), et un tube d'enveloppe extérieur (13) dans lequel le tube d'enveloppe intérieur (12) est reçu de manière à pouvoir coulisser le long de l'axe longitudinal, le tube d'enveloppe extérieur (13) pouvant être relié à un châssis du véhicule automobile, la colonne de direction (10) comprenant en outre un actionneur de rétroaction (4) qui comporte un moteur électrique (26) qui entraîne l'arbre de direction (2) par le biais d'un composant d'entraînement (33) relié à l'arbre de direction (2) pour transmettre un couple, **caractérisée en ce que** l'élément d'entraînement (33) comporte un évidement (300) ayant un diamètre inscrit maximal (D) qui est supérieur au diamètre extérieur du tube d'enveloppe intérieur (12), l'évidement (300) étant formé sur le côté du composant d'entraînement qui est dirigé vers le tube d'enveloppe intérieur (12).

2. Colonne de direction (10) selon la revendication 1, **caractérisée en ce que** l'arbre de direction (2) est télescopique et comporte un arbre intérieur (201) et un arbre extérieur (202).

3. Colonne de direction (10) selon la revendication 2, **caractérisée en ce que** le composant d'entraînement (33) comporte une portion d'accouplement (301) qui est accouplée solidairement en rotation à l'arbre de direction (2).

4. Colonne de direction (10) selon l'une des revendications précédentes, **caractérisée en ce que** le moteur électrique (26) entraîne l'arbre de direction (2) à l'aide d'une transmission (16).

5. Colonne de direction (10) selon la revendication 4, **caractérisée en ce qu'**un pignon côté sortie (30) de la transmission (16) est relié solidairement en rotation au composant d'entraînement (33).

6. Colonne de direction (10) selon la revendication 4 ou 5, **caractérisée en ce que** la transmission (16) est une transmission à vis sans fin et une roue à vis sans fin (30) forme le pignon côté sortie.

7. Colonne de direction (10) selon l'une des revendications précédentes 5 et 6, **caractérisée en ce que** le pignon (30) comporte une couronne dentée qui est réalisée à partir d'une matière synthétique.

8. Colonne de direction (10) selon l'une des revendications précédentes 1 à 3, **caractérisée en ce que** le moteur électrique (26) entoure concentriquement l'arbre de direction (2).

9. Colonne de direction (10) selon la revendication 8, **caractérisée en ce que** le rotor (260) du moteur électrique (26) est relié solidairement en rotation au composant d'entraînement (33).

10. Colonne de direction (10) selon l'une des revendications précédentes, **caractérisée en ce que** la colonne de direction (10) comporte au moins un mécanisme de réglage à moteur qui est disposé entre le tube d'enveloppe intérieur (12) et le tube d'enveloppe extérieur (13).
